# EUROPÄISCHE PATENTANMELDUNG

(11) **EP 2 716 529 A2**
(43) Veröffentlichungstag der Anmeldung: **09.04.2014**
(21) Anmeldenummer: 13179280.6
(22) Anmeldetag: 05.08.2013
(51) Int. Cl.: B62D 35/00

(54) **Luftleiteinrichtung mit Kinematik-Bremseinrichtung**

(30) Priorität: 02.10.2012 DE 202012103772 U; 18.01.2013 DE 102013100518
(71) Anmelder: HS Genion GmbH, 86899 Landsberg am Lech (DE)
(72) Erfinder: Thomas, Moritz, 81245 München (DE); Asendorf, Sven, 82211 Herrsching (DE)
(74) Vertreter: advotec.

(57) **Zusammenfassung**

Erfindungsgemäß wird eine Luftleiteinrichtung für ein Fahrzeug vorgeschlagen, umfassend mindestens ein verstellbares Spoilerelement (4), mindestens eine mit dem Spoilerelement (4) in einer Wirkverbindung stehende Kinematik (6) und einen mit der Kinematik (6) in Wirkverbindung stehenden Stellantrieb (8), der mindestens einen Antriebsmotor (10), der auf einem Basiselement (100) angeordnet ist und von welchem eine Antriebskette bis zur Kinematik (6) ausgeht, und mindestens ein Getriebe (12) umfasst, das über eine Antriebswelle (14) mit dem Antriebsmotor (10) verbunden ist. Die Luftleiteinrichtung weist mindestens eine Bremse (16) auf, welche in der Antriebskette zwischen dem Antriebsmotor (10) und der Kinematik (6) angeordnet ist und mit dem Antriebsmotor (10) und dem Getriebe (12) wirkverbindungsmäßig gekoppelt ist, so dass sie ein ungewolltes Verstellen des Spoilerelements (4) verhindert.

## Beschreibung

Die Erfindung betrifft eine Luftleiteinrichtung für ein Fahrzeug mit den Merkmalen des Oberbegriffs des Anspruchs 1.

Es sind Luftleiteinrichtungen bekannt, die ein Spoilerelement, eine mit dem Spoilerelement in einer Wirkverbindung stehenden Kinematik und einen mit der Kinematik in Wirkverbindung stehenden Stellantrieb umfassen, der einen Antriebsmotor, welcher auf einem Basiselement angeordnet ist, und ein Getriebe umfasst und mit einer Antriebswelle zusammenwirkt.

Das Spoilerelement einer Luftleiteinrichtung ist zwischen einer eingefahrenen Ruhestellung und einer ausgefahrenen Betriebsstellung verstellbar. Das Spoilerelement kann in jeder dieser beiden Stellungen und weitestgehend jeder Stellung dazwischen anordenbar sein, um eine ausreichende Funktionalität zu gewährleisten. Eine Anordnung wird entweder durch eine aktive Bremsfunktion des Antriebsmotors oder durch eine Selbsthemmung des Stellantriebs erreicht.

Wenn eine Selbsthemmung des Stellantriebs in jeder Stellung des Spoilerelements erforderlich ist, wird dies bisher entweder durch eine Spindel oder ein selbsthemmendes Getriebe bewerkstelligt. Hierbei bestehen Probleme mit dem Wirkungsgrad, der Geräuschentwicklung, den Produktionskosten und, je nach Ausführung des Stellantriebes bzw. des Getriebes, mit einem großen Bauraumbedarf.

Grundsätzlich sind Luftleiteinrichtungen, ungeachtet dessen ob sie aktiv gebremst oder selbsthemmend sind, unter gewissen Bedingungen fragil, was leicht zu Defekten führen kann. Es werden zwar viele mögliche, äußere Kräfte bei der Konstruktion berücksichtigt, jedoch treten in der Praxis immer wieder Situationen auf, in welchen äußere Kräfte das maximal Ertragbare einer Luftleiteinrichtung übersteigen. Daraus resultieren zumeist komplizierte Defekte, welche eine kostenintensive Reparatur oder auch den Austausch der gesamten Luftleiteinrichtung nach sich ziehen. Ursachen äußerer Kräfte können vielfältig sein. So sind beispielsweise das Ablegen von schweren Gegenständen auf einem sich in ausgefahrener Betriebsstellung befindlichen Spoilerelement oder das Abstützen und Aufsetzen von Personen auf das Spoilerelement zu nennen. Weder ein aktiv bremsender Antriebsmotor, noch ein selbsthemmendes Getriebe sind ausgebildet, einer derartigen Belastung standzuhalten.

Bei bisher bekannten Luftleiteinrichtungen ist der Antriebsmotor mittig auf einer vertikalen Fahrzeuglängsmittelebene angeordnet und in Fahrzeugquerrichtung ausgerichtet, so dass der Antriebsmotor beidseits eine in Fahrzeugquerrichtung verlaufende Antriebswelle betätigen kann. Am auf das Basiselement bezogenen außenseitigen Ende der Wellen findet beispielsweise mittels eines Winkelgetriebes eine Umlenkung des Kraftflusses in eine Kinematik statt, welche den Kraftfluss in ein Getriebe, beispielsweise in ein Spindelgetriebe weiterleitet.

Sowohl aktiv gebremste Luftleiteinrichtungen als auch selbsthemmende Luftleiteinrichtungen sind auch bezüglich des Bauraumbedarfs problembehaftet. Aktiv gebremste Luftleiteinrichtungen weisen aufgrund der genannten Doppelfunktion des Antriebsmotors einen relativ großen Antriebsmotor auf und selbsthemmende Luftleiteinrichtungen sind zum Herstellen einer selbsthemmenden Wirkung mit Schnecken-, Kegel-, oder Kronenradgetrieben ausgeführt.

Der Erfindung liegt daher die Aufgabe zu Grunde, eine Luftleiteinrichtung für ein Fahrzeug zu schaffen, welches die Nachteile des Standes der Technik überwindet, insbesondere dadurch, dass die Luftleiteinrichtung eine hinsichtlich des Wirkungsgrades, der Geräuschentwicklung, der Kosten und des Bauraumbedarfs optimierte Luftleiteinrichtung aufweist.

Diese Aufgabe ist erfindungsgemäß durch die Luftleiteinrichtung mit den Merkmalen des Anspruchs 1 gelöst.

Erfindungsgemäß wird daher eine Luftleiteinrichtung für ein Fahrzeug vorgeschlagen, welche mindestens ein verstellbares Spoilerelement, mindestens eine mit dem Spoilerelement in einer Wirkverbindung stehende Kinematik und einen mit der Kinematik in Wirkverbindung stehenden Stellantrieb umfasst, der mindestens einen Antriebsmotor, der auf einem Basiselement angeordnet ist und von welchem eine Antriebskette bis zur Kinematik ausgeht, und mindestens ein Getriebe umfasst, das über eine Antriebswelle mit dem Antriebsmotor verbunden ist. Die Luftleiteinrichtung weist mindestens eine Bremse auf, welche in der Antriebskette zwischen dem Antriebsmotor und der Kinematik angeordnet ist und mit dem Antriebsmotor und dem Getriebe wirkverbindungsmäßig gekoppelt ist, so dass sie ein ungewolltes Verstellen des Spoilerelements verhindert.

Die erfindungsgemäße Luftleiteinriehtung weist eine Bremse auf, um so die Nachteile des Standes der Technik zu überwinden und eine Rückstellung des Spoilerelements bei von außen angelegter Kraft zu verhindern. Ein nicht selbsthemmendes Getriebe bzw. Untersetzungsgetriebe ist um eine Bremse ergänzt. Auf Grund des Einsatzes der Bremse erzielt der Stellantrieb der Luftleiteinrichtung einen hohen Wirkungsgrad, welcher von der Verlustleistung der Bremse abhängig ist. Durch den Einsatz einer Bremse wird ein hoher Wirkungsgrad erzeugt, welcher höher ist als bei bekannten Systemen. So können relativ kleinere Antriebsmotoren eingesetzt werden. Dadurch lassen sich nicht nur Produktionskosten erheblich senken, sondern auch Folgekosten, die durch die Überlastung und/oder die Zerstörung einzelner Teile oder des gesamten Systems entstehen. Gerade größere, äußere Kräfte, wie das unsachgemäße Benutzen der Luftleiteinrichtung, beispielsweise durch das Ablegen von Gegenständen oder das Abstützen oder das Aufsetzen von Personen (Misuse-Belastung), führt an einer Luftleiteinrichtung ohne Bremse zu Schäden. Erfindungsgemäß ist die Bremse derart ausgestaltet, dass sie die Misuse-Belastung aufnimmt, so dass die Luftleiteinrichtung diesbezüglich weitestgehend unzerstörbar ausgeführt werden kann. Die Bremse schützt die Luftleiteinrichtung vor Überlastung und erzeugt einen "mechanisch weichen" Bremspunkt. Durch den Einsatz kleinerer Antriebsmotoren ist es auch möglich, entlang einer Fahrzeuglängsachse die Luftleiteinrichtung kleiner auszuführen und so einen geringeren Bauraum in Anspruch zu nehmen. Es ist auch möglich einen Antriebswinkel vollständig variabel auszuführen. Da die Bremse ein Direktantrieb an einem Gelenkpunkt der Kinematik möglich macht, entfallen zusätzliche Hebel.

Die Bremse bewirkt ein Moment, das die Antriebswelle in dieser Stellung am Drehen hindert, bis ein größeres Moment aufgebracht wird. Ist das resultierende Moment der Bremse größer als das von außen aufgebrachte Moment durch eine Misuse-Belastung, verhält sich der Stellantrieb wie ein selbsthemmender Antrieb. Ist das resultierende Moment der Bremse kleiner als das Drehmoment des Antriebsmotors oder des Moments durch eine Misuse-Belastung, kann die Bremse durchrutschen und der Stellantrieb verhält sich wie ein nicht selbsthemmender Antrieb.

Bei einer bevorzugten Ausführungsform der Luftleiteinrichtung nach der Erfindung ist die Bremse eine magnetische Bremse, welche eine Magneteinrichtung aufweist und deren Bremsenachse sich in Richtung der Antriebskette erstreckt. Vorteilhaft an einer solchen Bremse ist es, dass diese nur geringe Energie benötigt, wenn sie mit Permanentmagneten ausgestattet ist. Die Magneteinrichtung der magnetischen Bremse erzeugt einen magnetischen Eingriff bzw. ein Eingriffsmoment. Ein weiterer Vorteil liegt somit darin, dass sie nicht aktiv betätigt werden muss. Das durch die Magneteinrichtung aufgebaute und bremsende Magnetfeld muss lediglich beim Anlaufen überwunden werden und die dafür benötigte Energie wird beim Wiedereintritt in das Magnetfeld reinduziert. Es ist auch denkbar die Magneteinrichtung in Teilen oder im Ganzen elektrisch schaltbar auszuführen. So kann die Bremswirkung der Magneteinrichtung beim Anlaufen des Antriebsmotors verringert oder abgeschaltet werden, so dass der Antriebsmotor die anfängliche, magnetische Bremskraft überwinden kann oder diese ihm gar nicht entgegenwirkt.

Bei einer bevorzugten Ausführungsform der Luftleiteinrichtung nach der Erfindung besteht die magnetische Bremse aus einem gegenüber dem Basiselement fixierten Festelement und einem drehfest an der Antriebswelle angeordneten Rotationselement, welche eine von der Bremsenachse gebildete, gemeinsame Achse aufweisen. Das Festelement ist beispielsweise an einem Gehäuse fixiert und das Rotationselement steht mittels der Antriebswelle rotierbar mit dem Antriebsmotor in einer Wirkverbindung. Zwischen Festelement und Rotationselement ist ein umlaufender Spalt gebildet. Die Magneteinrichtung ist derart an dem Festelement und dem Rotationselement angeordnet, dass das Festelement und das Rotationselement in von der Magneteinrichtung definierten Positionen miteinander in einen magnetischen Eingriff kommen. Dieser magnetische Eingriff bewirkt ein Moment, das die Antriebswelle am Drehen hindert. Durch den Spalt ist es möglich die magnetische Bremse weitestgehend verschleißfrei auszuführen. Da die Bremswirkung durch eine Magneteinrichtung gewährleistet wird, weist das System eine geringe Temperaturabhängigkeit auf und gewährleistet eine sanfte Bremswirkung.

Bei einer bevorzugten Ausführungsform der Luftleiteinrichtung nach der Erfindung besteht die Magneteinrichtung aus mindestens einem sich entsprechenden Magnetpaar, vorzugsweise aus einem sich anziehenden Magnetpaar, das derart an der Bremse angeordnet ist, dass Partner des Magnetpaares in einen magnetischen Eingriff kommen können, wobei ein Partner am Festelement und ein Partner am Rotationselement angeordnet ist. Je exakter die Magneteinrichtung ausgerichtet ist, desto größer ist eine durch Magnetismus verursachte Anziehungs- bzw. Abstoßungskraft. Ein vollständiger, magnetischer Eingriff liegt vor, wenn sich die Partner des Magnetpaares in einer Ausrichtung einer größtmöglichen magnetischen Wechselwirkung befinden. Vorteilhafterweise sind sie derart zueinander ausgerichtet, dass sie sich anziehen. Es ist jedoch auch denkbar eine sich gegenseitig abstoßende Ausrichtung der Partner auszuführen. Falls die Magneteinrichtung mehr als ein Magnetpaar umfasst, können diese so um die Bremsenachse angeordnet sein, dass die Paare bei einer entsprechenden Stellung des Rotationselements zu dem Festelement gleichzeitig in einen magnetischen Eingriff kommen. Vorzugsweise sind die Paare so an dem Festelement und dem Rotationselement angeordnet, dass je nach Stellung des Rotationselements zu dem Festelement unterschiedliche Partner von Paaren miteinander in einen magnetischen Eingriff kommen können.

Mögliche auftretende radiale Schwingungen, erzeugt durch die Anziehungs- und Abstoßungskraft der Magneten, können durch eine Drehimpulserhaltung bzw. einen Gyroskopeffekt gedämpft werden, was zu einer Langlebigkeit führt. Durch die Anzahl der Magnetpaare bzw. Magnete und/oder deren Anordnung ist eine gute Abstimmbarkeit von Bremsstärke und Drehmomentverlauf möglich. Es ist auch denkbar, dass die Magneteinrichtung in Teilen oder auch im Ganzen aus einem magnetisierbaren Material des Festelements oder der Rotationselements besteht.

Bei einer bevorzugten Ausführungsform der Luftleiteinrichtung nach der Erfindung kann die Bremse eine Hysteresebremse sein. Denkbar ist auch eine schaltbare Hysteresebremse. Eine Hysteresebremse besteht aus einem äußeren Ring aus/oder mit Permanentmagneten und einem inneren Ring aus ferromagnetischem Material. Sie weist den Vorteil des permanenten Ummagnetisierens des inneren Rings auf, wodurch sie eine gleichmäßige und/oder sanfte Bremswirkung erzielt, welche unabhängig von einer Drehzahl ist. Die Bremsmomente einer Hysteresebremse sind präzise einstellbar, was dazu führt, dass im Zuge der Gleichteiligkeit in mehreren Produkten die gleiche Hysteresebremse verbaut werden kann, welche an das jeweilige Produkt anpassbar ist. Eine derartige Bremse ist zudem verschleißfrei und daher langlebig. Sie ist zudem geräuscharm und weist somit ein erwünschtes Merkmal auf. Da Luftleiteinrichtungen an verschiedensten Fahrzeugen verbaut werden und diese Fahrzeuge in verschiedenen Regionen der Welt unterwegs sind, erscheint es vorteilhaft, dass die Hysteresebremse eine geringe Temperaturabhängigkeit aufweist. Der Vorteil der Schaltbarkeit der Bremse liegt darin, dass der Antriebsmotor die Bremswirkung der Bremse beim Anlaufen nicht mehr überwinden muss und somit noch kleiner ausgestaltet werden kann. Sobald eine gewünschte Position des Spoilerelements erreicht ist, kann die Bremse zugeschaltet werden, um das Spoilerelement in der gewünschten Position zu verrasten. Konstruktionsbedingt weist die Hysteresebremse eine Grenzdrehzahl auf, bei welcher der Werkstoff der Hysteresebremse nicht mehr ummagnetisiert werden kann. Ist die Antriebsmotordrehzahl höher als die Grenzdrehzahl, hat die Hysteresebremse daher keine Bremswirkung mehr. Dadurch steht die zur Überwindung des Bremsmoments benötigte Antriebsleistung als zusätzliche Abtriebsleistung zur Verfügung, solange die Antriebsmotordrehzahl über der Grenzdrehzahl liegt.

Bei einer weiteren bevorzugten Ausführungsform der Luftleiteinrichtung nach der Erfindung ist das Getriebe ein Planetengetriebe. Ein Planetengetriebe ist in der Lage, hohe Drehmomente zu übertragen, und kann gleichzeitig klein ausgebildet werden. Ein solches Getriebe benötigt somit geringen Bauraum.

Bei einer weiteren bevorzugten Ausführungsform der Luftleiteinrichtung nach der Erfindung ist der Antriebsmotor zwischen zwei mit dem Spoilerelement verbundenen Kinematiken angeordnet, wobei er beidseitig jeweils von einer Antriebswelle eingegriffen ist, wobei eine Antriebswelle in seinem dem Antriebsmotor abgewandten Endbereich mit einem ersten Getriebe in Eingriff steht und eine zweite Antriebswelle mit seinem dem Antriebsmotor abgewandten Endbereich die Bremse entlang der Bremsenachse durchgreift und mit ihrem Ende in ein zweites Getriebe eingreift. Eine solche Anordnung weist bezüglich der Herstellungskosten ein Vorteil auf, da nur eine Bremse verbaut ist und somit eine Funktionalität der Luftleiteinrichtung gegeben ist.

Bei einer weiteren bevorzugten Ausführungsform der Luftleiteinrichtung nach der Erfindung ist der Antriebsmotor zwischen zwei mit dem Spoilerelement verbundenen Kinematiken angeordnet, wobei er beidseitig jeweils von einer Antriebswelle eingegriffen ist, wobei beide Antriebswellen mit ihren dem Antriebsmotor abgewandten Endbereichen jeweils eine Bremse entlang der Bremsenachse durchgreifen und mit ihren Enden in jeweils ein Getriebe eingreifen. Die zusätzliche Bremse optimiert die Anordnung dahingehend, dass der Antriebsmotor nicht dadurch asymmetrisch belastet wird, dass die Bremse nur einseitig des Antriebsmotors angeordnet ist. Vorteilhafterweise sind die Elemente beidseits des Antriebsmotors weitestgehend spiegelbildlich angeordnet und ausgebildet.

Bei einer weiteren bevorzugten Ausführungsform der Luftleiteinrichtung nach der Erfindung ist der Antriebsmotor zwischen zwei mit dem Spoilerelement verbundenen Kinematiken angeordnet, wobei er beidseitig jeweils von einer Antriebswelle eingegriffen ist, wobei beide Antriebswellen in ihren dem Antriebsmotor abgewandten Endbereichen mit jeweils einem Getriebe in Eingriff stehen und eine der Antriebswellen mit ihrem dem Antriebsmotor zugewandten Endbereich die Bremse entlang der Bremsenachse durchgreift. Vorteilhafterweise ist die Bremse in einer vom Antriebsmotor ausgehenden Antriebskette in einem Anfangsbereich der Antriebskette angeordnet. Dadurch können Wirkungsgradverluste in den in einer Antriebskette nachfolgenden Elementen bei Misuse-Belastung zur Bremsleistung hinzuaddiert werden. Ein weiterer Vorteil ist die Elastizität des Systems, so dass bei Misuse-Belastung beide Antriebswellen und beide Getriebe gleich belastet werden.

Bei einer weiteren bevorzugten Ausführungsform der Luftleiteinrichtung nach der Erfindung verläuft ein Kraftfluss entlang der Antriebskette, welcher vom Antriebsmotor ausgehend über das Getriebe, die Bremse und ein Umlenkelement auf die Antriebswelle in voranstehender Reihenfolge verläuft. Ein Vorteil dieses Kraftflusses und dieser Anordnung, bei welcher sich der Kraftfluss zwischen dem Antriebsmotor und dem Umlenkelement vorzugsweise parallel zum Wirkverbindungselement erstreckt, ist, dass lediglich ein Getriebe von Nöten ist, um eine funktionale Luftleiteinrichtung zu schaffen. Das Umlenkelement kann dabei als Stimradstufe, Riementrieb oder Koppeltrieb ausgeführt sein.

Bei einer weiteren bevorzugten Ausführungsform der Luftleiteinrichtung nach der Erfindung verläuft ein Kraftfluss entlang der Antriebskette, welcher vom Antriebsmotor ausgehend über die Bremse, das Getriebe und ein Umlenkelement auf die Antriebswelle in voranstehender Reihenfolge verläuft. Ein Vorteil dieses Kraftflusses und dieser Anordnung, bei welcher sich der Kraftfluss zwischen dem Antriebsmotor und dem Umlenkelement vorzugsweise parallel zum Wirkverbindungselement erstreckt, ist es, dass lediglich ein Getriebe von Nöten ist, um eine funktionale Luftleiteinrichtung zu schaffen. Zudem kann die Bremse klein ausgebildet sein, da sie lediglich das Drehmoment vom Antriebsmotor aufnehmen muss. Das Umlenkelement kann dabei als Stirnradstufe, Riementrieb oder Koppeltrieb ausgeführt sein.

Bei einer weiteren bevorzugten Ausführungsform der Luftleiteinrichtung nach der Erfindung ist beidseits einer vertikalen Fahrzeuglängsmittelebene und spiegelbildlich zu dieser jeweils eine Antriebswelle angeordnet, welche eine Bremse in Richtung der Bremsenachse durchgreift, mit ihrem der vertikalen Fahrzeuglängsmittelebene zugewandten Ende in einen Antriebsmotor eingreift und mit ihrem der vertikalen Fahrzeuglängsinittelebene abgewandten Ende in ein Getriebe eingreift. Die Verwendung zweier Antriebswellen und zweier Antriebsmotoren führt dazu, dass ein Bauraum zwischen den Antriebswellen weitestgehend frei bleibt. Die Anordnung der Bremse, des Antriebsmotors und des Getriebes können bezüglich des Basiselements frei gewählt werden.

Bei einer weiteren bevorzugten Ausführungsform der Luftleiteinrichtung nach der Erfindung ist zwischen den Antriebsmotoren eine Signalverbindung angeordnet, so dass die Antriebsmotoren synchronisiert sind. Die Signalverbindung ist vorzugsweise als Kabel ausgeführt. Es ist jedoch auch denkbar, in gleichem Maße eine kabellose Signalübertragung zu verwenden. Die Signalverbindung dient der Synchronisation der beiden Antriebsmotoren und stellt somit ein gleichmäßiges Verfahren des Spoilerelements sicher. Auch kann die Anordnung der Antriebselemente frei gewählt werden.

Ausführungsbeispiele einer Luftleiteinrichtung für ein Fahrzeug nach der Erfindung sind in der Zeichnung schematisch vereinfacht dargestellt und werden in der nachfolgenden Beschreibung näher erläutert.

In der Zeichnung zeigt:

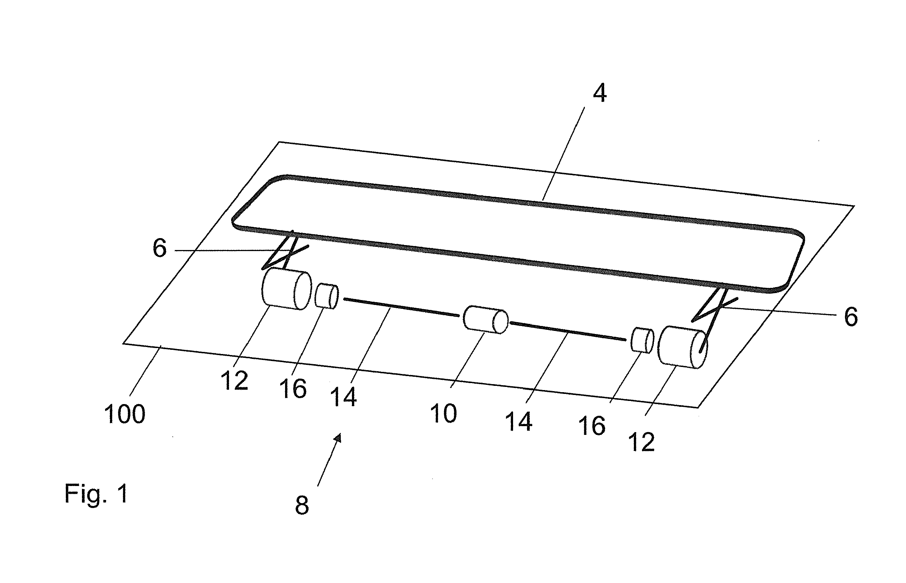

- Figur 1: eine erfindungsgemäße Luftleiteinrichtung für ein Fahrzeug in einer perspektivischen Darstellung;
- Figur 2: einen erfindungsgemäßen Stellantrieb einer ersten Ausführungsform in einer perspektivischen Darstellung;
- Figur 3: einen erfindungsgemäßen Stellantrieb einer weiteren Ausführungsform in einer perspektivischen Darstellung;
- Figur 4: einen erfindungsgemäßen Stellantrieb einer weiteren Ausführungsform in einer perspektivischen Darstellung;
- Figur 5: einen erfindungsgemäßen Stellantrieb einer weiteren Ausführungsform in einer perspektivischen Darstellung;
- Figur 6: eine Anordnung des erfindungsgemäßen Stellantriebs in einer perspektivischen Darstellung;
- Figur 7: eine weitere Anordnung des erfindungsgemäßen Stellantriebs in einer perspektivischen Darstellung;
- Figur 8: eine erfindungsgemäße Bremse in einer radialen Anordnung; und
- Figur 9: eine erfindungsgemäße Bremse in einer axialen Anordnung.

In der Zeichnung ist eine Luftleiteinrichtung für ein Fahrzeug dargestellt, die ein Spoilerelement 4, welches sich in eine Fahrzeugquerrichtung erstreckt, zwei in jeweils einem Endbereich in Längsrichtung des Spoilerelements 4 angeordnete Kinematiken 6 und einen Stellantrieb 8 aufweist, der zwischen den beiden Kinematiken 6 angeordnet ist und einen mittig angeordneten Antriebsmotor 10 aufweist, welcher quer zu der Fahrzeuglängsrichtung ausgerichtet und an einem Basiselement 100 angeordnet ist. Beidseits des Antriebsmotors 10 ist eine Antriebswelle 14 angeordnet, welche als Flexwelle ausgeführt ist und auf ihrer einer vertikalen Fahrzeuglängsmittelebene zugewandten, inneren Seite mit dem Antriebsmotor 10 und auf ihrer äußeren Seite mit einer Bremse 16 in einer Wirkverbindung steht. Die als magnetische Bremse ausgeführtte Bremse 16, welche beidseits einer durch eine vertikale Fahrzeuglängsrichtung definierte Mittelebene angeordnet ist, steht in einer Wirkverbindung mit einem, ebenfalls beidseits angeordneten Getriebe 12. Das Getriebe 12 ist zwischen der innenliegenden Bremse 16 und der außenliegenden Kinematik 6 angeordnet, mit welcher sie in einer Wirkverbindung steht.

Zum Verstellen des Spoilerelements 4 aus einer eingefahrenen Ruhestellung in eine ausgefahrene Betriebsstellung geht ein Kraftfluss in Form einer Rotationsbewegung beidseits vom mittig angeordneten Antriebsmotor 10 auf die beiden Antriebswellen 14 aus. Die beiden Antriebswellen 14 übertragen die Rotationsbewegung durch die Bremsen 16 hindurch. Die von den in der Bremse 16 angeordneten Magnetelementen verursachte Bremskraft in Form eines Magnetfeldes wird vom Antriebsmotor 10 beim Anlaufen überwunden. Während der Rotation der Bremse 16 wird die Bremsleistung reinduziert. Die Drehbewegung überträgt der Antriebsmotor 10 beidseits synchron an das Getriebe 12. Das als Planetengetriebe ausgeführte Getriebe 12 überträgt die Drehbewegung auf die Kinematik 6, so dass die Drehbewegung von einem Lagerpunkt an der Kinematik 6 aufgenommen wird und sich dadurch die Kinematik 6 so ausfährt, dass das Spoilerelement 4 gleichmäßig von einer eingefahrenen Ruhestellung in eine ausgefahrene Betriebsstellung verfahren wird. Ist das Spoilerelement 4 in eine gewünscht Stellung verfahren, kommen die Magnetelemente der Bremse 16 miteinander in einer definierten Eingriffsposition in einen magnetischen Eingriff und fixieren dadurch auch die Stellung des ausgefahrenen Spoilerelements 4.

Zum Verstellen des Spoilerelements 4 aus einer ausgefahrenen Betriebsstellung in eine eingefahrene Ruhestellung geht ein Kraftfluss in Form einer Rotationsbewegung beidseits vom mittig angeordneten Antriebsmotor 10 auf die beiden Antriebswellen 14 aus, wobei die Drehrichtung der Drehbewegung zum Einfahren der Drehrichtung zum Ausfahren entgegensetzt ist. Die beiden Antriebswellen 14 übertragen die Rotationsbewegung auf die Bremsen 16. Die von den in der Magnetbremse angeordneten Magnetelementen verursachte Bremskraft in Form eines Magnetfeldes wird vom Antriebsmotor 10 beim Anlaufen überwunden. Während der Rotation der Bremse wird die Bremsleistung reinduziert. Die Drehbewegung überträgt der Antriebsmotor 10 beidseits synchron an das Getriebe 12. Das Getriebe 12 überträgt die Drehbewegung auf die Kinematik 6, so dass die Drehbewegung von einem Lagerpunkt an der Kinematik 6 aufgenommen wird und sich dadurch die Kinematik 6 so einfährt, dass das Spoilerelement 4 gleichmä-ßig von einer ausgefahrenen Betriebsstellung in eine eingefahrene Ruhestellung verfahren wird. Ist das Spoilerelement 4 in eine gewünschte Stellung verfahren, kommen die Magnetelemente der Bremse 16 miteinander in einer definierten Eingriffsposition in einen magnetischen Eingriff und fixieren dadurch auch die Stellung des eingefahrenen Spoilerelements 4.

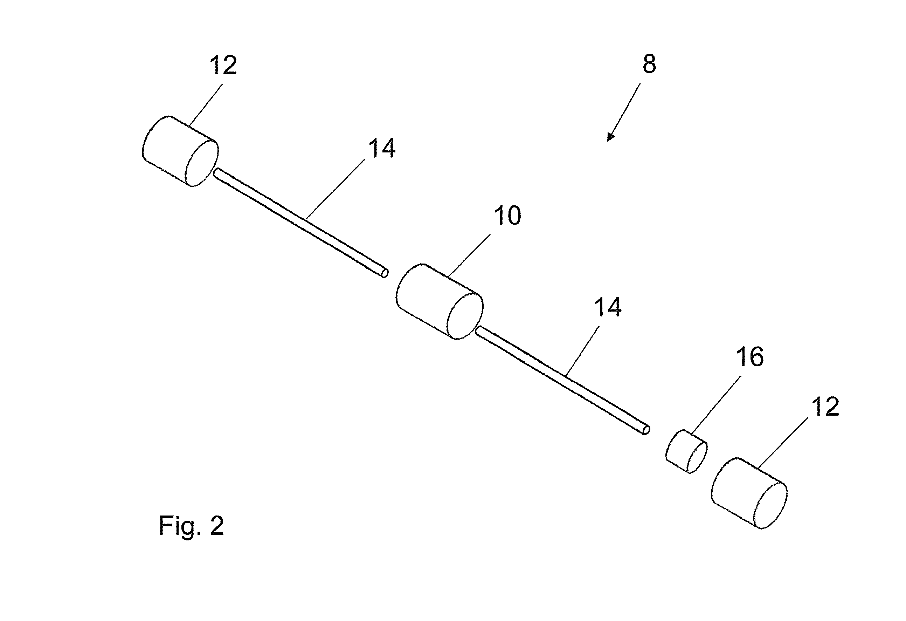

Figur 2 zeigt den Stellantrieb 8 in einer ersten Ausführungsform. Der mittig angeordnete Antriebsmotor 10 ist im Bereich einer durch eine vertikale Fahrzeuglängsrichtung definierte Ebene angeordnet und quer zu einer Fahrtrichtung ausgerichtet. Der Antriebsmotor 10 steht beidseits mit einer Antriebswelle 14 in Eingriff, welche sich in Fahrzeugquerrichtung erstreckt und die Drehbewegung überträgt. Auf einer Seite des Antriebsmotors 10 steht die Antriebswelle 14 direkt mit dem Getriebe 12 in Eingriff. Auf der gegenüberliegenden Seite steht die Antriebswelle 14 mit der Bremse 16 in Eingriff, welche die wellenseitige Drehbewegung aufnimmt und ihrerseits an das Getriebe 12 überträgt. Der Antriebsmotor 10 ist dabei derart ausgelegt, dass er die beiden Antriebswellen 14 synchron antreibt, so dass sich entweder beide Antriebswellen 14 drehen oder keine der beiden. Die eine Bremse 16 ist daher in der Lage, die Luftleiteinrichtung in einer definierten Position zu verrasten, ohne dass sich das Spoilerelement 4 auf der Seite des Antriebsmotors 10 absenken kann, auf welcher keine Bremse 16 angeordnet ist.

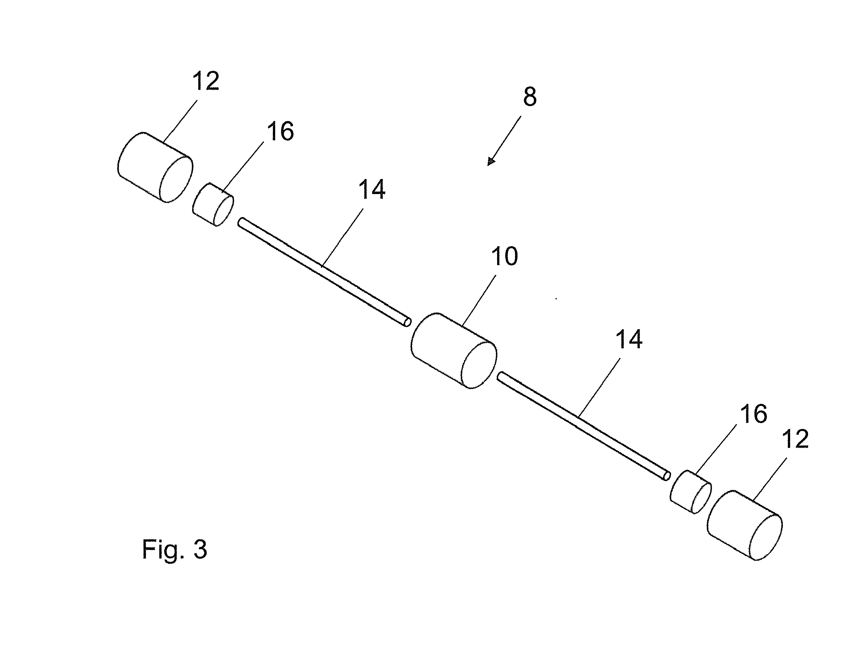

Der in Figur 3 abgebildete Stellantrieb 8 gleicht dem in Figur 2 dargestellten, bis auf die beidseitig der vertikalen Fahrzeuglängsmittelebene angeordneten Bremsen 16. Die Bremsen 16 sind zwischen den Antriebswellen 14 und den Getrieben 12 angeordnet. Eine Rotationsbewegung überträgt der Antriebsmotor 10 beim Ausfahren bzw. beim Einfahren des Spoilerelements 4 mittels den Antriebswellen 14 an die Getriebe 12.

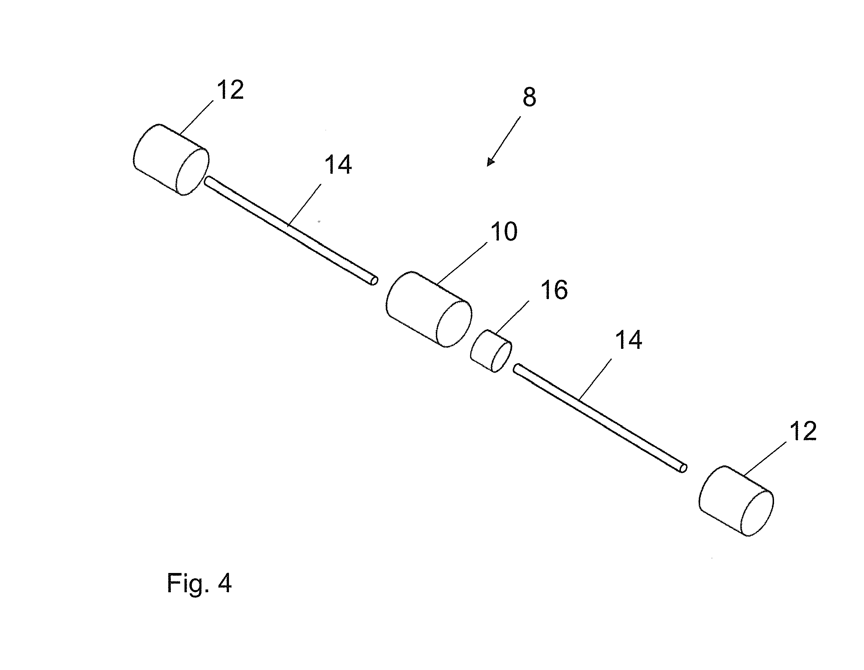

Der in Figur 4 abgebildete Stellantrieb 8 gleicht dem in Figur 2 dargestellten, bis auf die an einem inneren Ende der Antriebswelle 14 angeordnete Bremse 16. Der Kraftfluss des Antriebsmotors 10 wird in dieser Ausführungsform auf einer Seite des Antriebsmotors 10 zunächst in die Bremse 16 geleitet, welche die Drehbewegung darauf an die Antriebswelle 14 überträgt. Auf der anderen Seite des Antriebsmotors 10 wird die Drehbewegung vom Antriebsmotor 10 ausgehend direkt auf die Antriebswelle 14 übertragen.

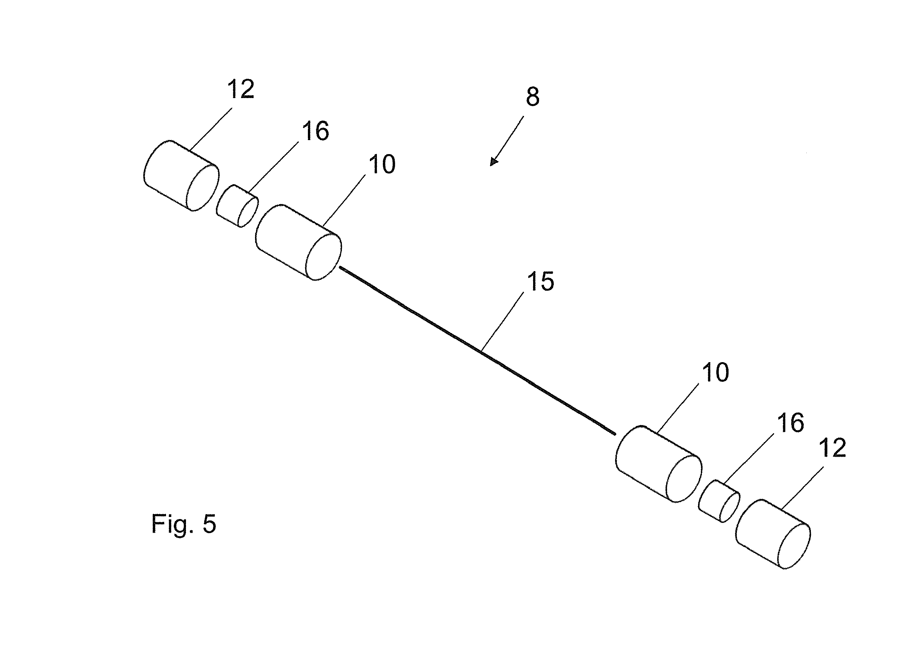

Einen Stellantrieb 8, welcher spiegelbildlich beidseits der vertikalen Fahrzeuglängsmittelebene symmetrisch angeordnet ist, zeigt Figur 5. Ein Antriebsmotor 10 ist jeweils beidseits der vertikalen Fahrzeuglängsmittelebene angeordnet und in eine Fahrzeugquerrichtung ausgerichtet. Die beiden Antriebsmotoren 10 sind mittels einer elektrischen Signalleitung verbunden, welcher als Kabel ausgeführt ist. Die Signalleitung dient der Synchronisation der beiden Antriebsmotoren 10 und stellt somit ein gleichmä-ßiges Verfahren des Spoilerelements 4 sicher. Der Antriebsmotor 10 überträgt die Rotationsbewegung in eine Fahrzeugaußenrichtung auf die Bremse 16, welche die Drehbewegung an das außenseitig liegende Getriebe 12 weiterleitet.

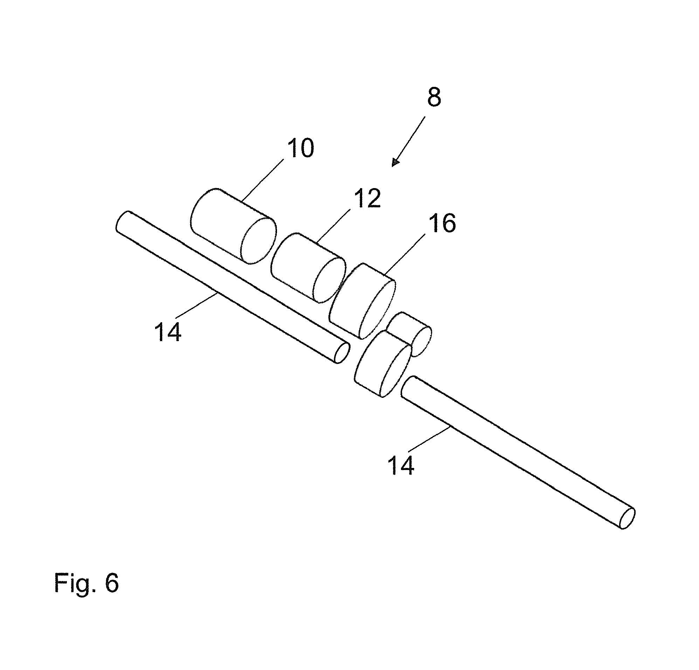

Figur 6 zeigt einen Stellantrieb 8, dessen Kraftfluss zunächst parallel zur Achse der Antriebswelle 14 verläuft. Der Antriebsmotor 10, welcher außerhalb einer vertikalen Fahrzeuglängsmittelebene angeordnet und in einer Fahrzeugquerrichtung ausgerichtet ist, überträgt eine Drehbewegung an das in Richtung einer vertikalen Fahrzeuglängsmittelebene liegende Getriebe 12. Im Bereich der vertikalen Fahrzeuglängsmittelebene ist die Bremse 16 angeordnet, auf welche das Getriebe 12 die Drehbewegung überträgt. Mittels einer geeigneten Konstruktion, welche hier als Stirnradstufe ausgeführt ist, überträgt die Bremse 16 die Drehbewegung auf die weitestgehend gleich ausgelegten Antriebswellen 14.

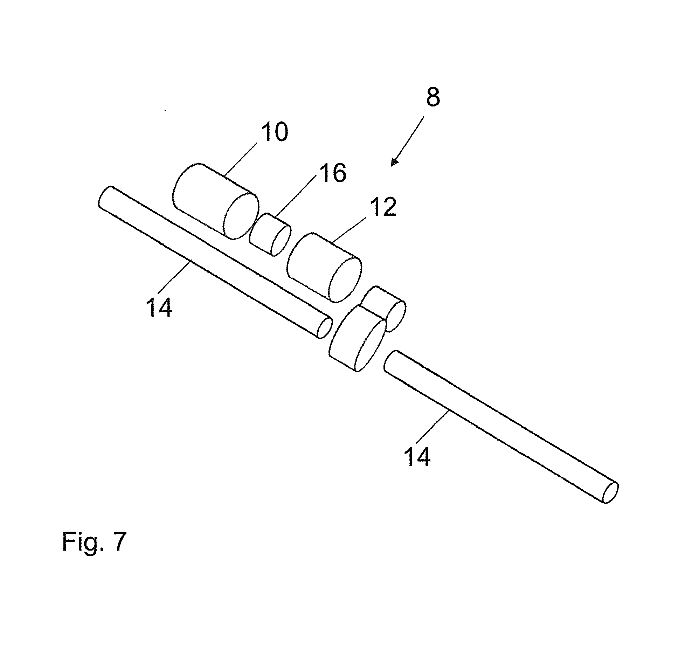

Der in Figur 7 dargestellte Stellantrieb 8 gleicht dem in Figur 6 dargestellten, jedoch überträgt der Antriebsmotor 10 die Drehbewegung direkt auf die Bremse 16, welche diese Bewegung an das Getriebe 12 weitergibt. Mittels einer geeigneten Konstruktion, welche hier als Stirnradstufe ausgeführt ist, überträgt das Getriebe 12 die Drehbewegung auf die weitestgehend gleich ausgelegten Antriebswellen 14.

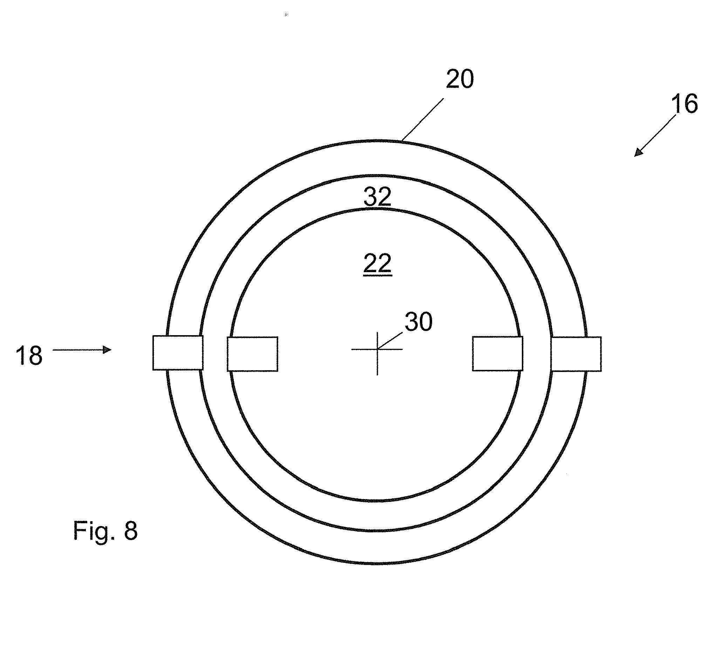

Figur 8 zeigt eine magnetische Bremse, deren Magneteinrichtung 18 radial um eine Bremsenachse 30 angeordnet ist und in radiale Richtung wirkt. Die Magnetbremse 16 besteht aus einem rotationssymmetrischen Festelement 20 und einem in dem Festelement um die gleiche Bremsenachse 30 rotierbar angeordneten, rotationssymmetrischen Rotationselement 22. Zwischen dem Festelement 20 und dem Rotationseleinent 22 ist ein Spalt 32 ausgebildet. Das Rotationselement 22 ist mit dem Stellantrieb 8 und der Kinematik 6 verbunden, so dass die vom Antriebsmotor 10 ausgehende Drehbewegung das Rotationselement 22 dreht. Das Festelement 20 ist drehfest angeordnet. Die Magneteinrichtung 18 weist zwei Permanentmagnetpaare auf, welche jeweils so angeordnet sind, dass ein Partner des Paares an dem Festelement 20 angeordnet ist und der entsprechende Partner des Paares an dem Rotationselement 22 angeordnet ist. Die Paare der Magneteinrichtung 18 sind so an der Bremse 16 angeordnet, dass sie gleichzeitig in einer definierten Position mit ihrem oder einem anderen Partner in eine Verrastung kommen. Die Magnetbremse 16 weist zwei Rastpositionen pro Umdrehung auf.

Zum Verstellen des Spoilerelements 4 von einer eingefahrenen Ruhestellung in eine ausgefahrene Betriebsstellung oder von einer ausgefahrenen Betriebsstellung in eine eingefahrene Ruhestellung wird eine Drehbewegung auf das Rotationselement 22 übertragen. Der magnetische Eingriff der Magneteinrichtung 18 wird dann gelöst, wenn die Kraft aus der Drehbewegung die magnetische Rastkraft übersteigt. Der Antriebsmotor 10 bringt diese eingriffskraftüberwindende Kraft lediglich beim Anfahren auf. Sobald sich das Rotationselement 22 im Festelement 20 dreht, wird die Bremsleistung der Magneteinrichtung 18 reinduziert. Ist das Spoilerelement 4 in eine gewünscht Stellung verfahren, kommen die Magnetelemente der Bremse 16 miteinander in einer definierten Eingriffsposition in einen magnetischen Eingriff und fixieren dadurch auch die Stellung des eingefahrenen Spoilerelements 4. Die Magneteinrichtung 18 ist fallspezifisch derart ausgelegt, dass sie das Spoilerelement 4 auch bei auftretenden, äußeren Kräften fixiert.

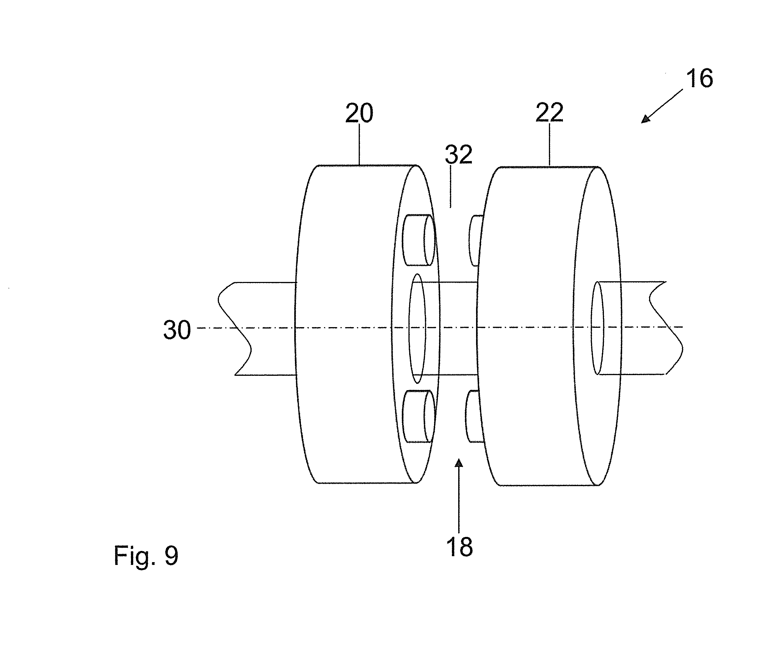

In Figur 9 ist eine Bremse 16 dargestellt, deren Magneteinrichtung 18 radial um eine Bremsenachse 30 angeordnet ist und in axiale Richtung wirkt. Die Bremse 16 gleicht in der Funktionsweise der in Fig. 8 abgebildeten Bremse 16. Die Magnetbremse 16 besteht aus einem rotationssymmetrischen Festelement 20 und einem um die gleiche Bremsenachse 30 rotierbar angeordneten, rotationssymmetrischen Rotationselement 22. Zwischen dem Festelement 20 und dem Rotationselement 22 ist ein Spalt 32 gebildet. Das Rotationselement 22 ist mit dem Stellantrieb 8 und der Kinematik 6 verbunden, so dass die vom Antriebsmotor 10 ausgehende Drehbewegung das Rotationselement 22 dreht. Das Festelement 20 ist drehfest ausgebildet. Die Magneteinrichtung 18 weist zwei Permanentmagnetpaare auf, welche jeweils so angeordnet sind, dass ein Partner des Paares an dem Festelement 20 angeordnet ist und der entsprechende Partner des Paares an dem Rotationselement 22 angeordnet ist. Die Paare der Magneteinrichtung 18 sind so an der Bremse 16 angeordnet, dass sie gleichzeitig in einer definierten Position mit ihrem oder einem anderen Partner in eine Verrastung kommen. Die Magnetbremse 16 weist zwei Rastpositionen pro Umdrehung auf.

### Bezugszeichenliste

- 4: Spoilerelement
- 6: Kinematik
- 8: Stellantrieb
- 10: Antriebsmotor
- 12: Getriebe
- 14: Antriebswelle
- 16: Bremse
- 18: Magneteinrichtung
- 20: Festelement
- 22: Rotationselement
- 30: Bremsenachse
- 32: Spalt
- 100: Basiselement

## Patentansprüche

1. Luftleiteinrichtung für ein Fahrzeug, umfassend mindestens ein verstellbares Spoilerelement (4), mindestens eine mit dem Spoilerelement (4) in einer Wirkverbindung stehende Kinematik (6) und einen mit der Kinematik (6) in Wirkverbindung stehenden Stellantrieb (8), der mindestens einen Antriebsmotor (10), der auf einem Basiselement (100) angeordnet ist und von welchem eine Antriebskette bis zur Kinematik (6) ausgeht, und mindestens ein Getriebe (12) umfasst, das über eine Antriebswelle (14) mit dem Antriebsmotor (10) verbunden ist, **gekennzeichnet durch** mindestens eine Bremse (16), welche in der Antriebskette zwischen dem Antriebsmotor (10) und der Kinematik (6) angeordnet ist und mit dem Antriebsmotor (10) und dem Getriebe (12) wirkverbindungsmäßig gekoppelt ist, so dass sie ein ungewolltes Verstellen des Spoilerelements (4) verhindert.

2. Luftleiteinrichtung nach Anspruch 1, **dadurch gekennzeichnet, dass** die Bremse (16) eine magnetische Bremse ist, welche eine Magneteinrichtung (18) aufweist und deren Bremsenachse (30) sich in Richtung der Antriebskette erstreckt.

3. Luftleiteinrichtung nach Anspruch 2, **dadurch gekennzeichnet, dass** die magnetische Bremse aus einem gegenüber dem Basiselement (100) fixierten Festelement (20) und einem drehfest an der Antriebswelle (14) angeordneten Rotationselement (22) besteht, welche eine von der Bremsenachse (30) gebildete, gemeinsame Achse aufweisen.

4. Luftleiteinrichtung nach Anspruch 1, **dadurch gekennzeichnet, dass** die Magneteinrichtung (18) aus mindestens einem sich entsprechenden Magnetpaar, vorzugsweise aus einem sich anziehenden Magnetpaar besteht, und derart an der Bremse (16) angeordnet ist, dass Partner des Magnetpaares in einen magnetischen Eingriff kommen können, wobei ein Partner am Festelement (20) angeordnet ist und ein Partner am Rotationselement (22) angeordnet ist.

5. Luftleiteinrichtung nach einem der Ansprüche 2 bis 4, **dadurch gekennzeichnet, dass** die Magneteinrichtung (18) der Bremse so angeordnet ist, dass deren Wirkrichtung radial zu der Bremsenachse (30) verläuft.

6. Luftleiteinrichtung nach einem der Ansprüche 2 bis 4, **dadurch gekennzeichnet, dass** die Magneteinrichtung (18) der magnetischen Bremse so angeordnet ist, dass deren Wirkrichtung axial zu der Bremsenachse verläuft.

7. Luftleiteinrichtung nach Anspruch 2, **dadurch gekennzeichnet, dass** die Bremse eine Hysteresebremse ist.

8. Luftleiteinrichtung nach Anspruch 1, **dadurch gekennzeichnet, dass** die Bremse eine mechanische Bremse ist.

9. Luftleiteinrichtung nach einem der Ansprüche 1 bis 8, **dadurch gekennzeichnet, dass** das Getriebe (12) ein Planetengetriebe ist.

10. Luftleiteinrichtung nach einem der Ansprüche 1 bis 9, **dadurch gekennzeichnet, dass** der Antriebsmotor (10) zwischen zwei mit dem Spoilerelement (4) verbundenen Kinematiken (6) angeordnet ist und beidseitig jeweils von einer Antriebswelle (14) eingegriffen ist, wobei eine Antriebswelle (14) in seinem dem Antriebsmotor (10) abgewandten Endbereich mit einem ersten Getriebe (12) in Eingriff steht und eine zweite Antriebswelle (14) mit seinem dem Antriebsmotor (10) abgewandten Endbereich die Bremse (16) entlang der Bremsenachse (30) durchgreift und mit ihrem Ende in ein zweites Getriebe (12) eingreift.

11. Luftleiteinrichtung nach einem der Ansprüche 1 bis 9, **dadurch gekennzeichnet, dass** der Antriebsmotor (10) zwischen zwei mit dem Spoilerelement (4) verbundenen Kinematiken (6) angeordnet ist und beidseitig jeweils von einer Antriebswelle (14) eingegriffen ist, wobei beide Antriebswellen (14) mit ihren dem Antriebsmotor (10) abgewandten Endbereichen jeweils eine Bremse (16) entlang der Bremsenachse (30) durchgreifen und mit ihren Enden in jeweils ein Getriebe (12) eingreifen.

12. Luftleiteinrichtung nach einem der Ansprüche 1 bis 9, **dadurch gekennzeichnet, dass** der Antriebsmotor (10) zwischen zwei mit dem Spoilerelement (4) verbundenen Kinematiken (6) angeordnet ist und beidseitig jeweils von einer Antriebswelle (14) eingegriffen ist, wobei beide Antriebswellen (14) in ihren dem Antriebsmotor (10) abgewandten Endbereichen mit jeweils einem Getriebe (12) in Eingriff stehen und eine der Antriebswellen (14) mit ihrem dem Antriebsmotor (10) zugewandten Endbereich die Bremse (16) entlang der Bremsenachse (30) durchgreift.

13. Luftleiteinrichtung nach einem der Ansprüche 1 bis 9, **gekennzeichnet durch** einen Kraftfluss entlang der Antriebskette, welcher vom Antriebsmotor (10) ausgehend über das Getriebe (12), die Bremse (16) und ein Umlenkelement auf die Antriebswelle (14) in voranstehender Reihenfolge verläuft.

14. Luftleiteinrichtung nach einem der Ansprüche 1 bis 9, **gekennzeichnet durch** einen Kraftfluss entlang der Antriebskette, welcher vom Antriebsmotor (10) ausgehend über die Bremse (16), das Getriebe (12) und ein Umlenkelement auf die Antriebswelle (14) in voranstehender Reihenfolge verläuft.

15. Luftleiteinrichtung nach einem der Ansprüche 1 bis 9, **dadurch gekennzeichnet, dass** beidseits einer vertikalen Fahrzeuglängsmittelebene und spiegelbildlich zu dieser jeweils eine Antriebswelle (14) angeordnet ist, welche eine Bremse (16) in Richtung der Bremsenachse (30) durchgreift, mit ihrem der vertikalen Fahrzeuglängsmittelebene zugewandten Ende in einen Antriebsmotor (10) eingreift und mit ihrem der vertikalen Fahrzeuglängsmittelebene abgewandten Ende in ein Getriebe (12) eingreift.

16. Luftleiteinrichtung nach Anspruch 15, **dadurch gekennzeichnet, dass** zwischen den Antriebsmotoren (10) eine Signalverbindung angeordnet ist, so dass die Antriebsmotoren (10) synchronisiert sind.
